# EUROPEAN PATENT SPECIFICATION

(11) **EP 4 376 585 B1**
(45) Date of publication and mention of the grant of the patent: **10.12.2025**
(21) Application number: 22747452.5
(22) Date of filing: 19.07.2022
(51) Int. Cl.: A01B 63/32, A01C 7/20

(54) **PLANTER IMPLEMENT**
PFLANZGERÄT
OUTIL DE PLANTEUR

(30) Priority: 27.07.2021 GB 202110749
(43) Date of publication of application: 05.06.2024
(73) Proprietor: Agco Do Brasil Soluções Agrícolas Ltda, 14030-680 Sau Paulo (BR)
(72) Inventor: FIOR, Vinicius Felipe, 14030-680 Sao Paulo (BR); CUNHA, Venicius Damo, 14030-680 Sao Paulo (BR); MATTER, Jarlis Luiz, 14030-680 Sao Paulo (BR); SAUERESSIG, Jonas, 14030-680 Sao Paulo (BR)
(74) Representative: AGCO Intellectual Property Department
(86) International application number: PCT/IB2022/056621
(87) International publication number: WO 2023/007311

(56) References cited:
- WO-A1-2016/172220
- WO-A1-2018/109546
- US-A1- 2011 315 410

## Description

### FIELD

Embodiments of the present disclosure relate generally to agricultural implements, and in particular, planter implements supported by one or more wheels.

### BACKGROUND

Agricultural machines such as planters with a plurality of row units are used to plant seeds upon or in the ground. Planters may have a central portion pulled by a tractor, and may have wings extending from either side. The individual row units, mounted to the center section or to a wing, typically deliver seeds into separate rows. The row units may receive seed from a common central hopper, which may be used to limit the effect of excessive weight on the wings. That is, the center section may be supported by more wheels or larger wheels, and thus may be better able to support the weight of the filled central hopper without exerting excessive pressure on the ground. To increase the speed at which fields can be planted, planters are becoming wider and the seed hoppers that feed the row units are becoming larger.

The wing sections are typically also supported by one or more wheels. The location of the wing wheels can limit where row units can be placed. The location of the wing wheels may be selected to enable particular spacing between row units (which may be referred to in the art as "row spacing" or "row width"). When changing from one crop to another with a different row spacing, row units are physically moved along a toolbar of a planter implement.

WO2018/209546 A (AGCO Corporation) discloses embodiments of a planter including a rotating toolbar. In a disclosed embodiment, a planter implement is disclosed having the features of the precharacterising portion of claim 1.

### BRIEF SUMMARY

In some embodiments, a planter implement includes a frame, at least one wheel support member coupled to the frame, at least one wheel carried by the at least one wheel support member, and a toolbar coupled to the at least one wheel support member at a pivot point.

In particular, the toolbar is coupled to the at least one wheel support member by at least one toolbar support member, wherein the at least one toolbar support member is rotatably coupled to the toolbar and rotatably coupled to the at least one wheel support member. The at least one toolbar support member may exhibit a length greater than a radius of the at least one wheel.. In some embodiments, the at least one toolbar support member may include a pair of parallel links.

At least one actuator may be configured to change an angle of the toolbar support member relative to the wheel support member.

The at least one wheel support member may exhibit a length greater than a radius of the at least one wheel. The at least one wheel support member may carry an axle of the at least one wheel. The at least one wheel support member may be rigidly coupled to the frame.

The frame may comprise a first section configured to be towed by a tractor; and a wing section hingedly coupled to the first section, wherein the at least one wheel support member is coupled to the wing section.

At least one actuator may be configured to change a position of the toolbar relative to the frame.

A plurality of planter row units may be carried by the toolbar. A hopper may be carried by the frame and configured to supply material to each of the planter row units.

In some embodiments, the at least one wheel support member is configured to carry the at least one wheel on either of two lateral sides of the at least one wheel support member.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of a tractor pulling an implement in accordance with one embodiment;
FIG. 2 is a simplified perspective view of a part of the implement shown in FIG. 1;
FIG. 3 is a simplified perspective view of a wheel support member of the implement shown in FIG. 1; and
FIG. 4 is a simplified perspective view of a portion of an embodiment of an implement according to the invention.

### DETAILED DESCRIPTION

The illustrations presented herein are not actual views of any planter or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those structures necessary to understand the embodiments of the disclosure are described in detail below. Additional conventional structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

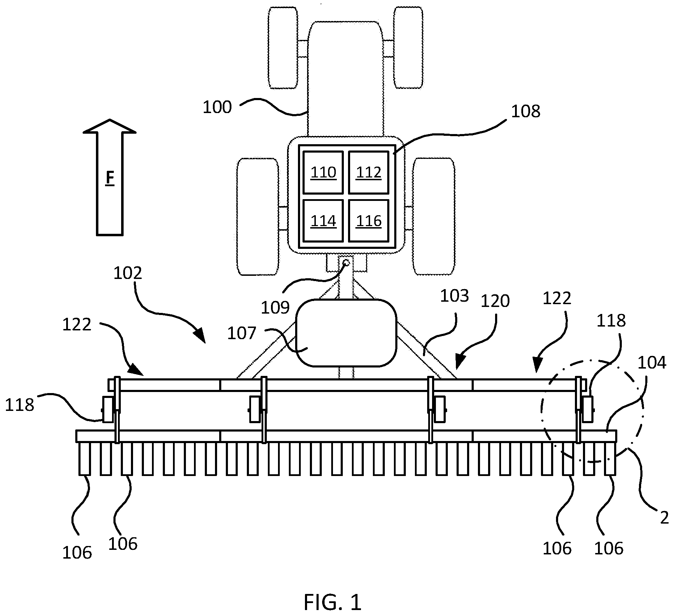

FIGS. 1 to 3 illustrate examples representing background art useful for an understanding of the invention. FIG. 1 illustrates a tractor 100 drawing an agricultural implement 102 in a forward direction F. The implement 102 has a frame 103 carrying a toolbar 104 supporting row units 106. The row units 106 may be connected to a central hopper 107 containing seed to planted and/or fertilizer to be applied. The implement 102 is connected to the tractor 100 by a tow hitch 109. A computer 108, which may include a central processing unit ("CPU") 110, memory 112, implement controller 114, and graphical user interface ("GUI") (e.g., a touch-screen interface), is typically located in the cab of the tractor 100. A global positioning system ("GPS") receiver 116 may be mounted to the tractor 100 and connected to communicate with the computer 108. The implement controller 114 is configured to communicate with the row units 106 and/or the GPS receiver 116, such as by wired or wireless communication. The implement 102 may be supported in the field by at least one wheel 118 coupled to the frame 103.

The frame 103 may include a section 120 (e.g., a center section) configured to be towed by the tractor 100 and one or more wing sections 122 hingedly coupled to the section 120. For example, and as shown in FIG. 1, the section 120 may be a center section, and two wing sections 122 may be attached to opposite sides thereof. The wing sections 122 may fold for transport or storage, and unfold (as shown in FIG. 1) for planting operations. Typically, the wheels 118 may support any or all of the sections 120, 122. In other embodiments, the center section 120 may be omitted, and two wing section 122 may be connected directly to one another.

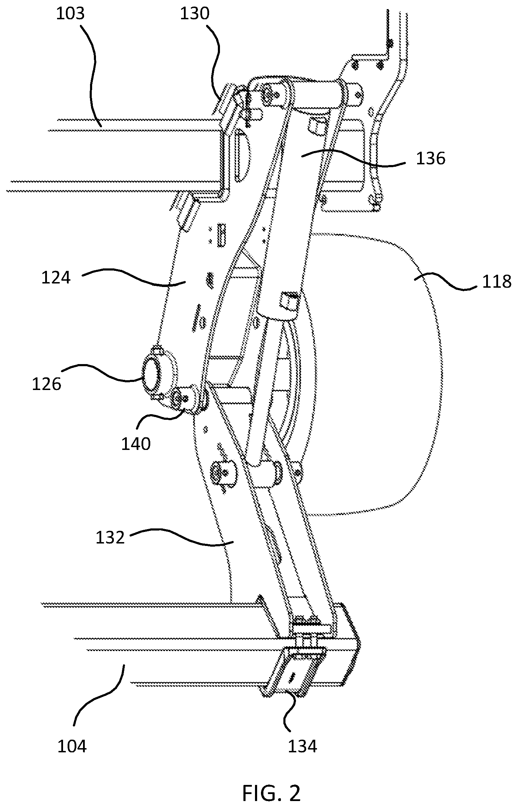

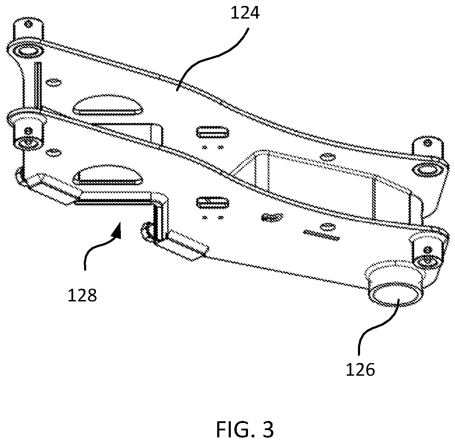

FIG. 2 is a perspective view of a part of the implement 120, identified in FIG. 1 by dashed circle 2. The row units 106 are omitted from FIG. 2 for clarity and simplicity. A wheel support member 124 is coupled to the frame 103, and carries the wheel 118. FIG. 3 is a perspective view of the wheel support member 124 alone. The wheel support member 124 is configured to carry an axle of the wheel 118. For example, the axle may slide into a sleeve 126 or other hole at one end of the wheel support member 124. The other end of the wheel support member 124 may be secured to the frame 103. In some embodiments, the wheel support member 124 may have a cutout shape 128 to match a shape of the frame 103 and to facilitate securing the wheel support member 124 to the frame 103. A mounting bracket 130 may be used to rigidly couple the wheel support member 124 to the frame 103, such as by surrounding a portion of the frame 103. The mounting bracket 130 may be secured by bolts or other selected devices.

The wheel 118 may be configured to be secured to either side of the wheel support member 124. FIG. 2 illustrates the wheel 118 outboard of the wheel support member 124, but the wheel 118 may alternatively be placed on the inboard side of the wheel support member 124, depending on the location of the row units 106, expected weight of the wing section 122, or other considerations. That is, the wheel support member 124 may carry the wheel 118 on either of two lateral sides of the wheel support member 124. The wheel support member 124 may have a length greater than the radius of the wheel 118 to enable the wheel 118 to rotate freely without interfering with the frame 103.

The toolbar 104 may be rotatably coupled to the wheel support member 124 by one or more toolbar support members 132, each of which may be rigidly coupled to the toolbar 104 and rotatably coupled to the wheel support member 124 at pivot point 140. The toolbar support member 132 also has a length greater than the radius of the wheel 118 to enable the wheel to rotate freely without interfering with the toolbar 104. The toolbar support member 132 may have a cutout shape to match a shape of the toolbar 104 and to facilitate securing the toolbar support member 132 to the toolbar 104. A mounting bracket 134 may be used to rigidly couple the toolbar support member 132 to the toolbar 104, such as by surrounding a portion of the toolbar 104. The mounting bracket 134 may be secured by bolts or other selected devices.

An actuator 136 may be connected between the wheel support member 124 and the toolbar support member 132. Extension or contraction of the actuator 136 changes the position of the toolbar 104 relative to the frame 103. Thus, the actuator 136 can move the toolbar 104 from a planting position to a transport position. The actuator 136 may be, for example, a pneumatic or electric actuator, and may be connected to the implement controller 114 by appropriate means (e.g., electrical or pneumatic signals). The actuator 136 is depicted in FIG. 2 as connecting one end of the wheel support member 124 to a middle part of the toolbar support member 132. However, the location and mounting of the actuator 136 may be at any selected point. In some embodiments, the actuator 136 may be mounted to the frame 103 and/or toolbar 104 directly, rather than to the wheel support member 124 and toolbar support member 132. In other embodiments, the actuator 136 may include a rotary actuator configured to rotate the toolbar support member 132 at its point of connection to the wheel support member 124.

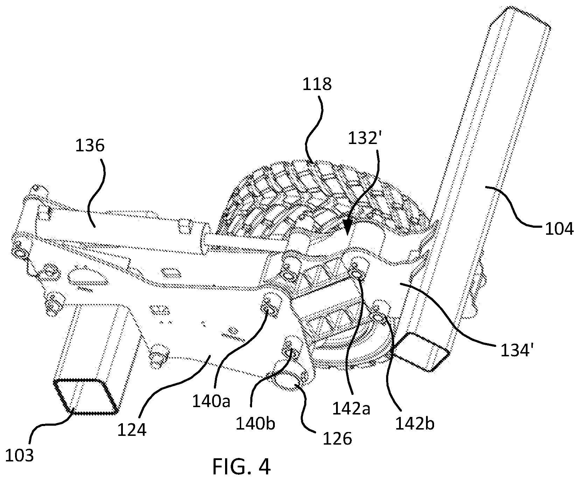

FIG. 4 is a simplified perspective view of another embodiment of a toolbar support member 132' illustrating aspects of the invention.

. The toolbar support member 132' is connected to the wheel support member 124, as in FIG. 2. However, the toolbar support member 132' in FIG. 4 is a pair of parallel links. Thus, the toolbar support member 132' is connected to the wheel support member 124 at two pivot points 140a, 140b, and to a mounting bracket 134' holding the toolbar 104 at two other pivot points 142a, 142b. The parallel links move relative to one another such that the toolbar 104 can move vertically and/or horizontally relative to the frame 103.

Conventional supports may include one member to carry the wheel 118 and a separate member to connect the toolbar 104 to the frame 103. Because the wheel support member 124 shown in FIGS. 2 and 3 performs two functions-supporting the wheel 118 and rotatably supporting the toolbar support member 132, the number of parts needed to build the implement 102 is decreased in comparison with conventional support means. A decrease in the number of parts (both the total number and the number of unique parts) can simplify manufacturing and repair and reduce overall costs.

Furthermore, because the number of parts connected to the frame 103 is limited, there may be more options for positioning the wheel support member 124 along the frame 103. Thus, the wheel support member 124 may be placed to accommodate different row unit spacing, and the location of the wheel 118 may be selected such that the wheel 118 is not in the path of a row unit. The wheel 118 may be carried by either side of the wheel support member 124, which enables more flexibility with respect to mounting the wheel support member 124. In some embodiments, the wheel 118 of each of the wing sections 122 may be located outboard of the last row unit 106, such that the wheel 118 does not compact the ground to be planted on the current pass through the field.

While the present disclosure has been described herein with respect to certain illustrated embodiments, those of ordinary skill in the art will recognize and appreciate that it is not so limited. Rather, many additions, deletions, and modifications to the illustrated embodiments may be made within the scope of the invention which is defined by the appended claims. Further, embodiments of the disclosure have utility with different and various machine types and configurations.

## Claims

1. A planter implement, comprising:
a frame (103);
at least one wheel support member (124) coupled to the frame (103);
at least one wheel (118) carried by the at least one wheel support member (124); and
a toolbar (104) coupled to the at least one wheel support member (124) at a pivot point (140;140a,140b) **characterised in that**
the toolbar (104) is coupled to the at least one wheel support member (124) by at least one toolbar support member (132'), wherein the at least one toolbar support member (132') is rotatably coupled to the toolbar (104) and rotatably coupled to the at least one wheel support member.

2. The implement of claim 1, wherein the at least one toolbar support member (132') comprises a pair of parallel links.

3. The implement of claim 2, further comprising at least one actuator (136) configured to change an angle of the toolbar support member (132;132') relative to the wheel support member (124).

4. The implement of either of claim 2 or claim 3, wherein the at least one toolbar support member (132;132') exhibits a length greater than a radius of the at least one wheel (118).

5. The implement of any one of claim 1 through claim 4, wherein the at least one wheel support member (124) exhibits a length greater than a radius of the at least one wheel (118).

6. The implement of any one of claim 1 through claim 5, wherein the at least one wheel support member (124) carries an axle of the at least one wheel (118).

7. The implement of any one of claim 1 through claim 6, wherein the at least one wheel support member (124) is rigidly coupled to the frame (103).

8. The implement of any one of claim 1 through claim 7, wherein the frame (103) comprises:
a first section (120) configured to be towed by a tractor; and
a wing section (122) hingedly coupled to the first section (120), wherein the at least one wheel support member (124) is coupled to the wing section (122).

9. The implement of claim 3 wherein the at least one actuator (136) is configured to change a position of the toolbar (104) relative to the frame (103).

10. The implement of any one of claim 1 through claim 9, further comprising a plurality of planter row units (106) carried by the toolbar (104).

11. The implement of claim 10, further comprising a hopper (107) carried by the frame (103) and configured to supply material to each of the planter row units (106).

12. The implement of any one of claim 1 through claim 11, wherein the at least one wheel support member (124) is configured to carry the at least one wheel (118) on either of two lateral sides of the at least one wheel support member (124).

## Patentansprüche

1. Pflanzeinrichtung-Anbaugerät mit:
einem Rahmen (103);
mindestens einem Rad-Tragelement (124), welches mit dem Rahmen (103) gekoppelt ist;
mindestens einem Rad (118), welches von dem mindestens einen Rad-Tragelement (124) getragen wird; und
einer Werkzeugstange (104), die mit dem mindestens einen Rad-Tragelement (124) in einem Schwenkpunkt (140; 140a, 140b) gekoppelt ist, **dadurch gekennzeichnet, dass**
die Werkzeugstange (104) mit dem mindestens einem Rad-Tragelement (124) mittels mindestens eines Werkzeugstangen-Tragelements (132') gekoppelt ist, wobei das mindestens eine Werkzeugstangen-Tragelement (132') drehbar mit der Werkzeugstange (104) gekoppelt ist und drehbar mit dem mindestens einen Rad-Tragelement gekoppelt ist.

2. Pflanzeinrichtung-Anbaugerät nach Anspruch 1, wobei das mindestens eine Werkzeugstangen-Tragelement (132') ein Paar paralleler Verbindungselemente aufweist.

3. Pflanzeinrichtung-Anbaugerät nach Anspruch 2, des Weiteren mit mindestens einem Aktuator (136), der für eine Veränderung eines Winkels des Werkzeugstangen-Tragelements (132; 132') relativ zu dem Rad-Tragelement (124) ausgebildet ist.

4. Pflanzeinrichtung-Anbaugerät nach Anspruch 2 oder Anspruch 3, wobei das mindestens eine Werkzeugstangen-Tragelement (132; 132') eine Länge aufweist, die größer ist als ein Radius des mindestens einen Rads (118).

5. Pflanzeinrichtung-Anbaugerät nach einem der Ansprüche 1 bis 4, wobei das mindestens eine Rad-Tragelement (124) eine Länge aufweist, die größer ist als ein Radius des mindestens einen Rads (118).

6. Pflanzeinrichtung-Anbaugerät nach einem der Ansprüche 1 bis 5, wobei das mindestens eine Rad-Tragelement (124) eine Achse des mindestens einen Rads (118) trägt.

7. Pflanzeinrichtung-Anbaugerät nach einem der Ansprüche 1 bis 6, wobei das mindestens eine Rad-Tragelement (124) fest oder steif mit dem Rahmen (103) gekoppelt ist.

8. Pflanzeinrichtung-Anbaugerät nach einem der Ansprüche 1 bis 7, wobei der Rahmen (103) aufweist:
einen ersten Abschnitt (120), der für ein Ziehen durch einen Traktor ausgebildet ist; und
einen Flügelabschnitt (122), der verschwenkbar mit dem ersten Abschnitt (120) gekoppelt ist, wobei das mindestens eine Rad-Tragelement (124) mit dem Flügelabschnitt (122) gekoppelt ist.

9. Pflanzeinrichtung-Anbaugerät nach Anspruch 3, wobei der mindestens eine Aktuator (136) für eine Veränderung einer Position der Werkzeugstange (104) relativ zu dem Rahmen (103) ausgebildet ist.

10. Pflanzeinrichtung-Anbaugerät nach einem der Ansprüche 1 bis 9, des Weiteren mit mehreren Pflanzeinrichtung-Reiheneinheiten (106), die von der Werkzeugstange (104) getragen werden.

11. Pflanzeinrichtung-Anbaugerät nach Anspruch 10, des Weiteren mit einem Behälter oder Trichter (107), der von dem Rahmen (103) getragen wird und für eine Bereitstellung von Material für jede der Pflanz-Reiheneinheiten (106) ausgebildet ist.

12. Pflanzeinrichtung-Anbaugerät nach einem der Ansprüche 1 bis 11, wobei das mindestens eine Rad-Tragelement (124) für ein Tragen des mindestens einen Rads (118) auf beiden lateralen Seiten oder einer der beiden lateralen Seiten des mindestens einen Rad-Tragelements (124) ausgebildet ist.

## Revendications

1. Instrument de type semoir, comprenant :
un châssis (103) ;
au moins un élément de support de roues (124) couplé au châssis (103) ;
au moins une roue (118) portée par l'au moins un élément de support de roues (124) ; et
une barre porte-outils (104) couplée à l'au moins un élément de support de roues (124) au niveau d'un point pivot (140 ; 140a, 140b), **caractérisé en ce que**
la barre porte-outils (104) est couplée à l'au moins un élément de support de roues (124) par au moins un élément de support de barre porte-outils (132'), dans lequel l'au moins un élément de support de barre porte-outils (132') est couplé en rotation à la barre porte-outils (104) et couplé en rotation à l'au moins un élément de support de roues.

2. Instrument selon la revendication 1, dans lequel l'au moins un élément de support de barre porte-outils (132') comprend une paire de bras parallèles.

3. Instrument selon la revendication 2, comprenant en outre au moins un actionneur (136) configuré pour modifier un angle de l'élément de support de barre porte-outils (132 ; 132') par rapport à l'élément de support de roues (124).

4. Instrument selon l'une ou l'autre de la revendication 2 ou de la revendication 3, dans lequel l'au moins un élément de support de barre porte-outils (132 ; 132') présente une longueur plus grande qu'un rayon de l'au moins une roue (118).

5. Instrument selon l'une quelconque de la revendication 1 à la revendication 4, dans lequel l'au moins un élément de support de roues (124) présente une longueur plus grande qu'un rayon de l'au moins une roue (118) .

6. Instrument selon l'une quelconque de la revendication 1 à la revendication 5, dans lequel l'au moins un élément de support de roues (124) porte un essieu de l'au moins une roue (118).

7. Instrument selon l'une quelconque de la revendication 1 à la revendication 6, dans lequel l'au moins un élément de support de roues (124) est couplé de manière rigide au châssis (103).

8. Instrument selon l'une quelconque de la revendication 1 à la revendication 7, dans lequel le châssis (103) comprend :
une première section (120) configurée pour être remorquée par un tracteur ; et
une section aile (122) couplée de manière articulée à la première section (120), dans lequel l'au moins un élément de support de roues (124) est couplé à la section aile (122).

9. Instrument selon la revendication 3 dans lequel l'au moins un actionneur (136) est configuré pour modifier une position de la barre porte-outils (104) par rapport au châssis (103).

10. Instrument selon l'une quelconque de la revendication 1 à la revendication 9, comprenant en outre une pluralité d'unités formant rangée de semoirs (106) portées par la barre porte-outils (104).

11. Instrument selon la revendication 10, comprenant en outre une trémie (107) portée par le châssis (103) et configurée pour alimenter en matière chacune des unités formant rangée de semoir (106).

12. Instrument selon l'une quelconque de la revendication 1 à la revendication 11, dans lequel l'au moins un élément de support de roues (124) est configuré pour porter l'au moins une roue (118) sur l'un ou l'autre des deux côtés latéraux de l'au moins un élément de support de roues (124).
